# EUROPEAN PATENT SPECIFICATION

(11) **EP 2 608 041 B1**
(45) Date of publication and mention of the grant of the patent: **20.05.2015**
(21) Application number: 11195582.9
(22) Date of filing: 23.12.2011
(51) Int. Cl.: G06F 11/34, G06F 21/00

(54) **Monitoring user activity on smart mobile devices**
Überwachung der Benutzeraktivität auf intelligenten mobilen Vorrichtungen
Surveillance de l'activité d'utilisateur sur des dispositifs mobiles intelligents

(43) Date of publication of application: 26.06.2013
(73) Proprietor: Deutsche Telekom AG, 53113 Bonn (DE)
(72) Inventor: Glass, Gregor, 12203 Berlin (DE); Henke, Katja, 12159 Berlin (DE); Schneider, Lutz, 13509 Berlin (DE); Batyuk, Leonid, 10439 Berlin (DE); Schmidt, Aubrey-Derrick, 13355 Berlin (DE); Raddatz, Karsten, 13359 Berlin (DE); Albayrak, Sahin, 14195 Berlin (DE); Camtepe, Ahmet, 10557 Berlin (DE)
(74) Representative: Vossius & Partner Patentanwälte Rechtsanwälte mbB

(56) References cited:
- EP-A2- 2 341 437
- US-A- 5 696 702
- US-A1- 2005 197 804
- US-A1- 2011 038 542

## Description

### FIELD OF THE INVENTION

The invention relates to a method for monitoring user activity on mobile devices and a method for analyzing user activity at a server. Further, a computer program product comprising one or more computer readable media having computer executable instructions for performing the steps of at least one of the aforementioned methods is provided.

### BACKGROUND OF THE INVENTION

Mobile computing devices, as smartphones or tablets for example, are giving the possibility to easily browse the Internet, process emails or make phone calls at any place. Due to their increased attractiveness more and more people start using such devices creating a large market for service and network providers, application developers, and marketing specialists. Since these devices provide comprehensive functionalities to their users, the complexity of some applications and services is too high to be handled by an average user. Helping the user managing this complexity is a hard task since users are often not able to describe the exact technical situation that is causing problems.

Especially mobile phones have become the central computing and communication devices today. Since August 2006, more mobile phones than inhabitants are registered in Germany. As the capabilities of these devices increase, they are not simple voice-centric handsets any more. They represent one step towards realizing Mark Weiser's vision of ubiquitous computing (Mark Weiser, The computer for the 21st century, Scientific American, 265(3):94-104, September 1991). In this vision, it is described that classical computers will be replaced by small, intelligent, distributed, and networked devices that will be integrated into everyday objects and activities. This replacement can be already observed in shops and warehouses using tags for monitoring and controlling items. The evolution of mobile devices, in particular smartphones, can be seen as part of this vision since they represent a possibility for making use of technical and computational capabilities in a mobile context. Smartphone is a commonly used term for describing current comprehensive mobile phones, although no global industry definition exists. A common understanding of this term is that these devices provide state-of-the-art technical characteristics as well as software development environments that allow creation of third-party applications.

With the increasing capabilities of mobile devices, more and more people start using mobile devices such as smartphones or tablets. Remote-capabilities for helping the user managing the complexity of some applications on such mobile devices are generally limited due to the lack of solutions being supported by the operating systems. Due to security reasons, standard application programming interfaces (API) do not provide satisfying code for remote functionality, although remote capabilities would greatly improve support service effectiveness.

One of the most recent mobile operating systems is Google's Android, which is a software stack that includes an operating system, middleware and basic applications. The first Android device was released in October 2008, the T-Mobile G1. The Android system is built on Linux 2.6 Kernel and supports most of its functionalities. Android treats every application equal, meaning both, that a developer is able to replace every single Android program and an Android application can be run on any Android device only being limited by the provided functionalities. Google's Android security mechanisms are based on those of a Linux system. Access control, e.g. user and group IDs, is managed where every installed application gets its own user ID with its specific permissions. These permissions allow finer-grained access adjustment for processes using certain functionalities, e.g. sending SMS messages or dialing a phone call. Due to its open platform concept and its large share, Android is on the focus of most malware developers.

The internal attributes of a computer system are subject to heavy fluctuation. With every state change the status of the system changes as well. Web-based approaches as known from Google Analytics, Opentracker or Clicktale can use user clicks, mouse-movements and cookies to track user behavior. In comparison to this, monitoring user behavior on a mobile device, such as a smartphone or a tablet or the like, is much harder since most mobile operating systems restrict access to corresponding functionality due to security reasons.

In an evaluation by Falaki et al. of smartphone usage, devices were monitored to gather information about user behavior (Hossein Falaki, Ratul Mahajan, Srikanth Kandula, Dimitrios Lymberopoulos, Ramesh Govindan, and Deborah Estrin; Diversity in smartphone usage; In Proceedings of the 8th international conference on Mobile systems, applications, and services, MobiSys '10, pages 179-194, New York, NY, USA, 2010. ACM). Two different datasets were used to analyze user behavior. The first was acquired using Android based smartphones while the second dataset (Windows Mobile) was provided by an organization investigating smartphone usability. The Android data set used in this evaluation was obtained by a custom logging tool, SystemSens (H. Falaki, R. Mahajan, and D. Estrin, Systemsens: A tool for monitoring usage in smartphone research deployments; In Proceedings of the sixth ACM international workshop on mobility in the evolving internet architecture. ACM, 2011). It is implemented as a background service that records the state of the screen (on or off), the start and end of incoming as well as outgoing voice calls, the interaction duration per application, the network traffic each application produces and finally the battery level. Logged data is stored in a SQLite database on the device and uploaded to a server when the handset is charged in order to not tamper with the battery data. SystemSens collects most of its data event-based via an event logging API introduced in Android 2.2 to minimize energy consumption. Some data like CPU and memory usage is collected via polling at a fixed interval of 2 minutes.

Swatch is a log file monitor with filtering capabilities (Stephen E. Hansen, E. Todd Atkins, and E. Todd; Automated system monitoring and notification with swatch; pages 145-155, 1993). Its purpose is to ease monitoring system health and security status of computer systems. It relies on the UNIX syslog facility. Swatch, which stands for Simple WATCHer, monitors the log files and filters them to gather relevant system information. It allows specifying actions like execution of a script or sending mail triggered by certain patterns in the log. The functionality of Swatch relies on regular expressions which is the reason why it is implemented in Perl. The underlying syslog makes it easy to scale up to several hosts by logging to a dedicated logging server. In order to gain the needed information, several system utilities needed modification to report more comprehensively to syslog. The determination of the state of a distributed system is more difficult as on normal computer systems. Several solutions for state detection on distributed systems are developed but detailed user information are not extracted where basic key ideas have the same basis for detecting activities on a system.

K. Mani Chandy and Leslie Lamport present an algorithm to determine the global state of a distributed system during a computation (K. Mani Chandy and Leslie Lamport; Distributed snapshots: determining global states of distributed systems; ACM Trans. Comput. Syst., 3:63-75, February 1985). A process is used which collects information from other processes. These processes can record their own state. This means that the process which collects the information has to work in cooperation with these other processes. The collecting process is superimposed on the underlying computation and it has to run concurrently but it does not alter the underlying computation. The algorithm was developed to detect stable properties like "system is deadlocked".

Another approach for monitoring the state of a distributed system was developed by Van Renesse et al. (Robbert Van Renesse, Kenneth P. Birman, and Werner Vogels; Astrolabe: A robust and scalable technology for distributed system monitoring, management, and data mining; ACM Trans. Comput. Syst., 21:164-206, May 2003). They introduce a technology to monitor a distributed system called Astrolabe. Astrolabe is a DNS-like distributed information management system. It monitors the dynamically changing state of the system and reports summaries of this information to the user. They showed that Astrolabe can scale with thousands of nodes with no significant performance degradation. The delay of the information propagation between the nodes is in a range of tens of seconds. Meng S. et al. presented their approach to monitor the state of a cloud datacenter. Their approach is window-based where they developed a framework called WIndow-based StatE monitoring (WISE). This framework alerts only when state violation is continuous within a time window. During the development of WISE they encountered several challenges. Firstly, distributed aggregation which means the ability of summarizing information from voluminous distributed monitored values was encountered. Secondly, while aggregate information on a distributed system can lead to running similar tasks in an isolated manner which is an unnecessary resource consumption this means the framework has to share the aggregation tasks. It could be shown that WISE solved these challenges and that it reduces the communication by 50%-90% compared to instantaneous monitoring.

Xev is a tool working on Linux-based systems for showing window-based events. This is done by creating an own window or by attaching to an existing one. Every event, e.g. a mouse-drag, a keyboard-stroke or a window-movement, is indicated and can be stored for post-processing. The main purpose of this tool is stated to be debugging. The main problem with Xev is that it requires an X-Server environment for being executed. For now, this environment is not available for current mass market mobile devices using mobile operating systems such as Android.

At first glance, a promising place to look for user-related activity information is the operating system itself, i.e. in the case of the Android operating system to have a look at the Dalvik Virtual Machine which executes Android/Dalvik executables. However, in most operating systems, the source code of the parts relevant for user-related activity information is not well documented and implementing these parts into a method for monitoring user activity would result in a high dependency to changes made to the source code. In the case of Android, a class called Instrumentation is provided which helps to monitor executed applications. When running with instrumentation turned on, this class will be instantiated before any application code, allowing monitoring all the interaction the system has running with the application. An Instrumentation implementation is described to the system through an AndroidManifest.xml's 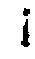 instrumentation 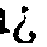 tag. Hence, the class Instrumentation is a tool that gives simple access to information related to Android Activities which are in most cases the related screens of applications. However, the class has to be registered in the AndroidManifest.xml of each monitored application since the application will be instantiated by the Instrumentation class for being able to monitor it. The result is that every installed application would need to be modified for a generic monitoring approach making it inoperative for a method for monitoring user activity on mobile devices.

An essential step in monitoring user activity is the identification of the foreground running application. In the case of Android, the foreground application represents the actually viewed application/Android Activity. All open Activities are stored in the Activity Stack where the foreground application lies on top of this stack. Android provides functionality for investigating the stack and hence, allowing you to identify the foreground application.┐

On Android devices, using the KeyListener class, it would be possible to record all inputs related to a certain Android View. Views occupy rectangular areas on the screen where each view is responsible for drawing and event handling of a certain subpart of an Activity. Part of these inputs are the entered keys which can be recorded for a corresponding application. The limiting factor making it inappropriate for a method for monitoring user activity on mobile devices is that every monitored application would need modifications for recording the keys similar to the use of the Instrumentation class.

For monitoring user activity, it is not enough to solely identify the foreground application. Analyzing the user-interface-elements of a running application can be very beneficial at this point since it would provide more detailed information on the current user interaction with the system.┐

In Android, all Views, i.e. the user-interface-elements in Android, are defined in XML files and these files are required by the operating system. Searching for the Views is one essential problem since each View has a unique ID which is handled by the corresponding Activity. Fetching this information via Dalvik Virtual Machine would lead to major changes in the design of the operating system making it not applicable for consumer devices.

In Android, the application context is a class that allows access to application-specific resources and classes. Additionally, actions such as sending and receiving Android intents can be accessed. In general, all information related to an Activity are stored in its context. Again, fetching this information is not possible on an retail phone and a follow up realization would require major changes in the operating system design.

US2011038542 discloses a method for monitoring user activity wherein the user activity on the input unit is detected, a hash is created of a representation of all elements displayed on the screen and a screenshot is created of the items displayed on the output unit.

### SUMMARY OF THE INVENTION

It is an object of the present invention to provide a method for monitoring user activity on mobile devices and a corresponding computer program product. This object is achieved with the features of the independent claims 1 and 9.

One aspect of the invention is related to a method for monitoring user activity on mobile devices wherein detailed data about the application context is given and support for customer services is given with a minimum of technical conversation with the user of the mobile device. This aspect of the invention is carried out using a generic hash key of the user-interface-element management list which generates a unique identifier for the corresponding user action.

Key strokes or any other user activity on an input device are used in order to detect general user activity. The foreground running application which shows the current application in use is detected. Using the user-interface-element management list, the exact window within an application the user is currently viewing or editing is identified. The user-element-list is hashed for obtaining a unique identifier of the user activity. A screenshot is created for making the current user activity verifiable for the customer service or the help desk and for ameliorating debugging possibilities. The collected items are stored at a local and / or a remote database, wherein the remote database can be at a server. At the server side, the collected data can be unambiguously labeled or otherwise enriched.

A mobile device is a non-stationary computational device built on a mobile computing platform, with advanced computing ability and connectivity, having a processor unit capable of being operated by an operating system. The mobile device can be for example a smartphone, a tablet, a PDA or the like.

The input unit is a unit the user can enter commands in for actively operating the mobile device. Such an input unit can be a touchscreen for example, or a keyboard or a mouse.

The foreground running application is the application which the user is currently using, viewing or editing. The foreground running application can be the only running application on the mobile device or can be just one among a plurality of running applications. Identifying the foreground application is one step in tracking user activity. It is the basis of investigating detailed activities of users within identified applications.

A user-interface is a part of an application where the interaction between the user and the application occurs. The user-interface typically consists of different user-interface-elements. An application, which is adapted for the interaction with the user, running on a mobile operating system, has a user-interface-element management list, managing the different user-interface-elements and comprising related information thereof. Analyzing the user-interface-elements, it will be possible to get detailed information about the current application usage of the user. User-interface-elements comprise information whether a user is currently writing a text message, reading emails or changing settings. Basing on the structure of an application, user-interface-elements, including the user-interface-element management list, represent the finest-grained information describing user activity.

The user-interface-element management list is hashed using a hash function, i.e. a hash key of the user-interface-element management list is generated. According to naming conventions, this hash key is generally unambiguous. For processing reason, the hashing is performed in order to receive a comparable pattern that can be used to verify user activity. Due to naming conventions of the applications, this hash code is unique and will only be generated, if a corresponding user is using the exactly same user-interface-element as recorded earlier.

Creating screenshots enables to label each identified user-interface-element while additional manual information can be added to it. These manual descriptions are useful since in most cases no further public information exists.

The method for monitoring user activity on a mobile device further comprises the step of storing at least one of the following items: the information about the detected and / or logged user activity, the information about the foreground running application, the hashed user-interface-element list and the screenshot at a local and / or remote database.

Said items can also be stored at a local database first and then sent to a remote database where they are stored; or said items can also be stored at both databases, the local and the remote one, simultaneously. An advantage of data-storage on a server side is that identified activities for all applications having the same build number on any mobile device will be the same. This would allow a general comparison of user complications with a certain application.

In an embodiment of the invention, the method for monitoring user activity on a mobile device may further comprise the step of extracting at least one of the following further items: at least one fully qualified class name and / or at least one ID and /or at least one relation of at least one user-interface-element from the user-interface-element management list and storing the extracted items at a local and / or remote database.

In particular, the items can be extracted from the user element, which the user is currently using, for example viewing or editing. A relation of the user-interface-element may be an existing child or parent user-interface-element having any relation to the corresponding user-interface-element.

In an embodiment of the invention, the foreground running application is identified by polling a running application manager whenever user activity on the input device is detected.

This method of polling the running application manager is particularly advantageous for mobile devices with limited system resources.

According to an embodiment of the invention, the screenshot is created by reading data from a buffer and creating a picture from this buffer. This method can particularly be used for operating systems that have no built-in possibility to create screenshots.

In an embodiment of the invention, the remote database is a database of a remote server.

According to an embodiment of the invention, at least one of the items stored at a local and / or remote database is labeled with a respective unambiguous tag. The unambiguous tag can comprise for example a timestamp, a client's name, a file name or the like.

According to the invention, a computer program product comprises one or more computer readable media having computer executable instructions for performing the steps of at least one of the aforementioned methods.

For realizing a method for monitoring user activity on a mobile device, it is necessary to set up a monitoring system that indicates the current state on request. Using such a monitoring system even provides the possibility to analyze whole flows of actions which will additionally improve results of support or marketing measures. In general, the monitoring data is influenced by three main subjects: the hardware, the operating system including all handled applications and data, and the user. Each of these three subjects influences each other and results in monitorable values describing the current state of a monitored system. When developing a monitoring system, not all values describing the state of a device are accessible. Especially, user actions are hard to follow since each application builds its own domain restricting access from external sources. It is possible to use generic information such as the running process in order to estimate user activity but normally, these measures will not give detailed information on the current user actions.

The present invention can be used so that authorized services, such as remote help desks, can help to identify, understand and solve technical problems of users and to detect anomalies in applications running on a mobile device. Especially knowing the exact technical state or situation can be used in order to analyze problems and give detailed recommendations. Moreover, not only support services would benefit of such information: e.g. application developers can analyze the most used functionality of their application for setting priorities in future development tasks and operators and marketing specialist can use this data for activity-based and context-sensitive marketing and recommend systems.

Another example for a possible use of the present invention is the field of malware and intrusion detection. As an example where more detailed information can be very helpful is the detection of malware that sends messages to premium services for gaining profit. A significant increase of such malware targeting mobile devices and in particular smartphones can be observed. Using standard monitoring, it is possible to detect that a message was sent. In some cases, it might be even possible to detect user activity resulting in positive detection if messages were sent without user interaction. But since it is assumed that malware writers are highly skilled, they will hide message transmission within phases of arbitrary user activity. Without more comprehensive information, an anomaly detection system will not be able to differentiate between an user sending a message and a user just reading his short message while a malware is sending messages to a premium service.

### BRIEF DESCRIPTION OF THE DRAWINGS

Fig. 1 schematically shows a listing for detecting a foreground Activity via an ActivityManager on Android;
Fig. 2 schematically shows a listing for creating a screenshot from a frame buffer on Android;
Fig. 3 shows schematically an array of one pixel in the frame buffer;
Fig. 4 (a) shows schematically different stages in a text message conversation;
Fig. 4 (b) shows additional application contexts for a text message conversation;
Fig. 5 shows a server displaying the application context on a mobile device using Symbian; and
Fig. 6 shows an activity diagram of a computer program on a mobile device performing a method for monitoring user activity on a mobile device with Android according to one embodiment of the invention

### DETAILED DESCRIPTION OF THE INVENTION

The subject-matter of the present application - monitoring user activity on a mobile device - is adapted for the use in any kind of mobile operating system due to its general applicability. One embodiment is the use in Google's Android operating system. Since the technical implementation in a mobile operating system cannot be obviously solved due to the lack of standard out-of-the-box solutions, several small bypasses are needed. The following description will give a detailed explanation of the performed actions.

In order to detect user activity on a mobile device, the user interaction with an input unit is detected. For not being bound to a corresponding application, it is preferable to have an overall detection of key events on an operating system level. Similarly to other Linux distributions, Android's kernel abstracts input devices, as for example keyboards, touchscreens or mice, as a set of serial devices located under /dev/input/. The names of the individual devices may vary according to the manufacturer and device configuration. However, the format of the messages emitted by the devices is the same across handsets. Hence, a tool, in particular a Java-Native-Interface based tool, can be created which is able to observe which serial devices are located under /dev/input/. An individual thread is spawned per input device, with an observer obtaining and parsing the input events and posting them to an event pool, in particular an event pool in Java-space. The observer may be implemented in C and is able to communicate with the Android application, in particular by using the Java-Native-Interface. According to one embodiment, since input events, particularly those emitted by a touchscreen interface are numerous and nearly concurrent, the event pool can sort its contents by timestamps and / or unambiguous tags. Input events can consist of a starting point, intermediate actions (e.g. mouse drag), and an ending point. Upon each received input, the event pool can be examined by a detection service. If a complete input event is detected, it can be recorded to a database and the event pool can be flushed to preserve memory.

In general, any operating system has a task manager comprising information about current running applications on the operating system. Every application running on Android which uses the permission android:permission=GET TASKS can obtain an instance of an ActivityManager, which is the task manager of the Android operating system. The ActivityManager has information about all running activities. Information is hold by an ActivityManager.RunningTaskInfo object. To retrieve the foreground activity, i.e. the foreground running application, the ActivityManager.RunningTaskInfo object has a field called topActivity which retrieves the activity component at the top of the history stack of the task.

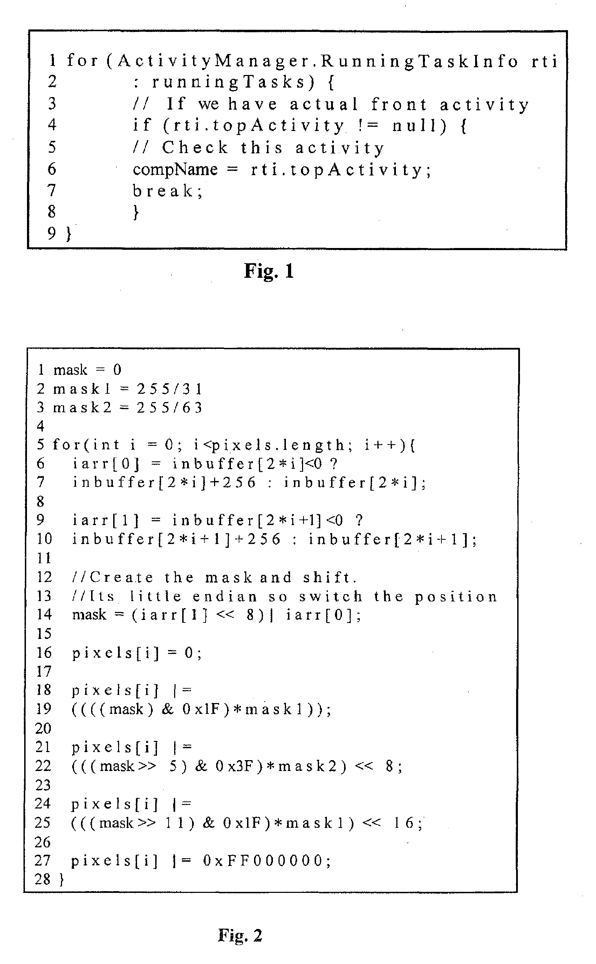

According to one embodiment, the ActivityManager is polled and the name of the running application is compared in order to detect a change of the foreground running application. According to another embodiment, as shown schematically in Fig. 1, the ActivityManager is polled only when user activity on the input device, on the touchscreen for example, is detected. According to one embodiment, the name of the recognized foreground running application can be stored and / or labeled with a timestamp and / or an unambiguous tag.

For monitoring user activity, it may not be enough to solely identify the foreground application. Analyzing the user-interface-elements of a running application can be very beneficial at this point since it would provide more detailed information on the current user interaction with the system. On Android, such the user user-interface-element management list, which is managing and handling the user-interface-elements, is preferably a View Hierarchy wherein the user-interface-elements are preferably Views.

Android's source code comprises an infrastructure for debugging View Hierarchies. The tool used for this purpose is called Hierarchy Viewer and is included in the Android System Developer Kit. In order for this tool to work, the emulator, i.e. the tool, hosts a telnet-like service which dumps the current window complete with detailed information on the layout properties of each individual view. According to one embodiment, the tool included in the Android System Developer Kit is modified in order to increase its performance by reducing the set of generated information of a certain View to the following: fully qualified class name, ID, and a relation to other Views, e.g. information about the existence of a child View or a parent View for example. This reduction is a reliable way to generate signatures / items of View Hierarchies which are unique for each screen and state within an application.

According to another embodiment, process-related information can enrich the monitoring data, which are stored at a database, e.g. process name, process ID, parent process ID, user ID, memory size or number of started threads.

According to one embodiment, a screenshot can be created using an application programming interface (API) which is provided by the operating system or a third party developer. According to another embodiment, the screenshot can be created by reading data from the frame buffer and creating a picture from this data. This procedure is particularly important for operating systems that do not provide any means for generating screenshots. Creating screenshots by reading data from the frame buffer and creating a picture from this data is possible since the last picture from the screen is stored in the frame buffer. In Android, the frame buffer can be found in /dev/graphics/fb0.

According to one embodiment, the data is interpreted as presented schematically in the listing, shown in Fig. 2. A loop reads the data from a pixel and stores it / them in a new pixel array. The pixel is stored in 16 bit and each color has 5 bits, wherein the last bit is empty since an alpha value is not stored in the frame buffer of this embodiment. According to this embodiment, lines 18-19 represents the extraction of the color blue, lines 21-22 the extraction of green, and lines 24-25 the extraction of red. In this embodiment, as aforementioned, there is no alpha value / channel, such that the last bits are masked with FF (line 27).

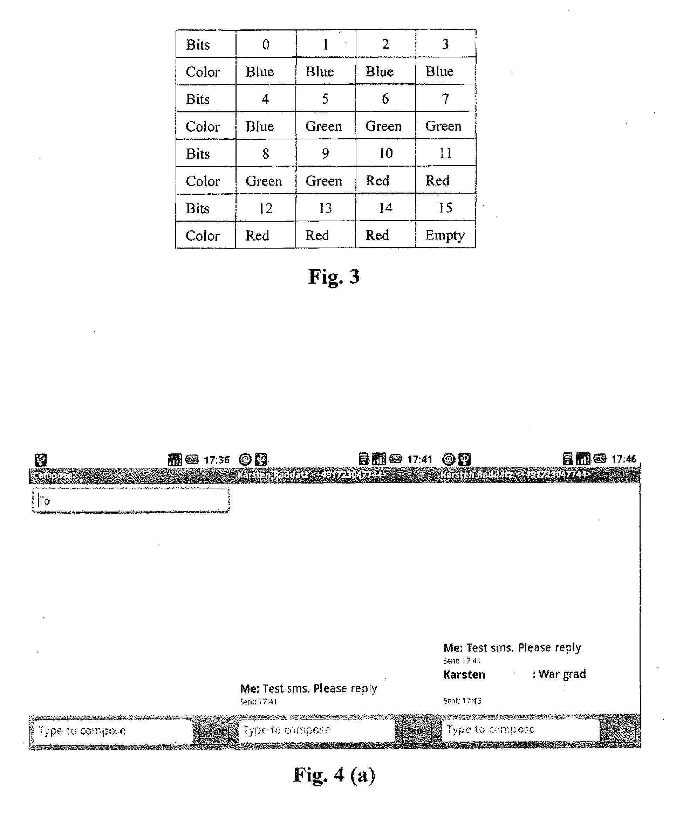

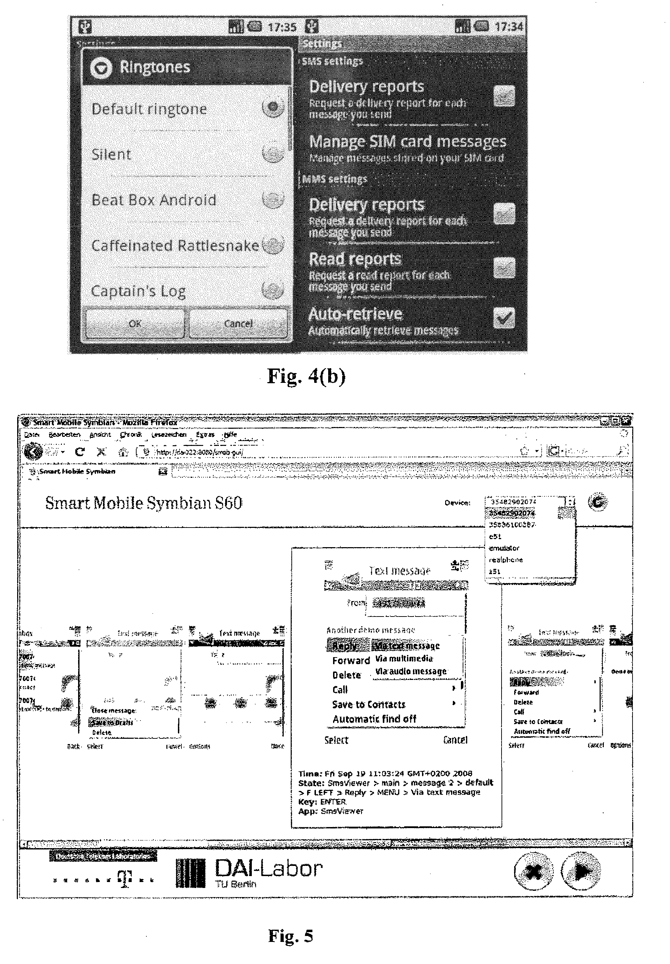

Fig. 3 shows schematically such an array for the color values for one pixel in the frame buffer. Fig. 4 (a) presents different stages in a text message conversation according to an embodiment using a mobile device with Android operating system. Fig. 4 (b) depicts additional application contexts such as a menu for the selection of a text message ringtone and a text message settings menu according to the embodiment. Each context receives its own hash code even on minor changes: F896E95C7B7B506B2FB56C1BE46943A9, 3723573169F24490B07DDD2D1572F292, 6566A266CCCBA359D5E708B5E6BB1, 12D65BB4E3EBB4FBD4F2B9E62EC7C14,and 9D7F5636E2989AAF607CC0107A50EC4 E. Using these hashcodes, an exact identification of the foreground user activity is possible. According to one embodiment, the Bitmap class from Android is able to read the new pixel array and create a Bitmap which can be stored as a picture file, preferably a PNG picture.

According to one embodiment, the extracted items, such as for example the detected user activity on the input device or the created screenshot, are stored at a remote database on a server. According to another embodiment, a custom application is deployed capable of using the extracted items, in particular the hashed user-element-interface management list, for showing the client side application context to a customer service which is logged onto the server. This client side application context can be a screenshot possibly amended with extracted information of the user-interface-element management list, the currently used user-interface-element or the hashed user-interface-element management list. According to another embodiment, each item and / or plurality of items relating to the same client case can be manually or automatically labeled, e.g. with "creation of a text message". In addition, labeling the items with any other information related to the client case is possible, as for example the client name, date, time etc.

A server interface presenting the client side application context on the client's mobile device is shown in Fig. 5, wherein Symbian OS is used as the mobile operating system on the mobile device. Screenshots of detected states are created once and transferred to the server for visualization which basically enables remote working persons to investigate usage on a device.

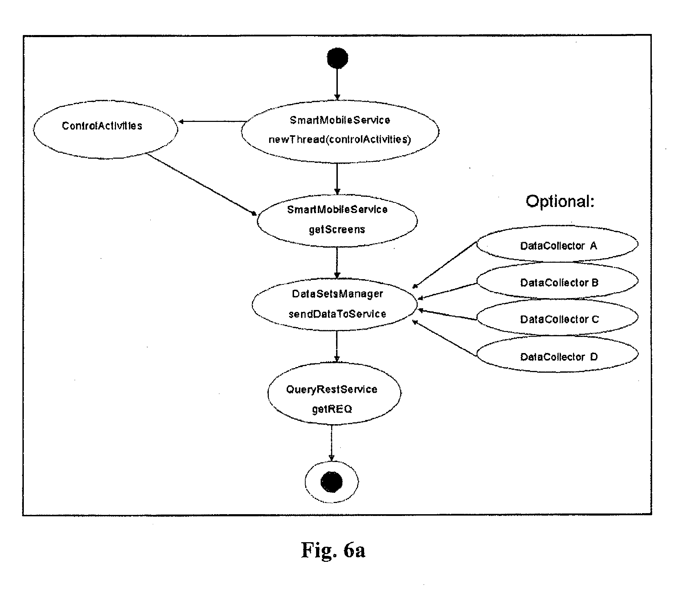

According to one embodiment, a client application on the mobile device is designed within a modular architecture. Each client task has a corresponding module performing the desired functionality. According to one embodiment as schematically presented in Fig. 6, the system comprises a Tracking and a Communication Module for Android.

In the Tracking Module, screen IDs are generated from each user-interface-element which has the current focus on the screen, i.e. the output device. The Screen IDs are used in connection with remote services for managing more comprehensive and detailed system states. Such a comprehensive state can consist of the hashcodes, keystroke profiles, list of processes running in parallel and so on. In Android, the screen IDs can be fetched from a SmartMobileService which is implemented as an Android persistent service. The fetched screen IDs can be sent via a DataSetsManager method sendDataToService which uses a QueryRestService to finally send all relevant data to a responsible web service. The method sendDataToService is a hook method which can be extended to add additional information from existing data collectors, as for example DataCollector A, B, C, and D in Fig. 6.

In the Communication Module, an integer value named reqType, a char value for the format of the data which will be sent and an integer for an UID for an initialization process are required corresponding to receiving signatures or sending events to a REST-Webservice. In the Communication Module, there is a method, getREQ(LinkedList<String> datas), which needs required data as a list of strings which shall be send to a REST-Web service. On success, the method then returns an instance of a class ModelsType which holds a complete parsed XML structure which was received from a query to the REST-Web service. The primary purpose of the Communication Module is to communicate with external components, e.g. a server that can store all identified states with corresponding screenshots. This step is not necessarily required for the identification process itself but it allows integration of additional services basing on the corresponding information resulting from the identification process.

## Claims

1. A method for monitoring user activity on a mobile device running on Android mobile operating system comprising an input unit and an output unit comprising the following steps in the following order:
(a) detecting user activity on said input unit;
(b) identifying a foreground running application;
(c) hashing of a user-interface-element management list of the foreground running application;
(d) creating a screenshot comprising items displayed on said output unit;
wherein the foreground running application is identified by querying the field topActivity of the ActivityManager.RunningTaskInfo object of a running application manager whenever user activity on the input device is detected, and
wherein the user activity on said input device is detected by an observer thread being spawned for each input device, the input events being obtained by said observer threads and the input events being posted to an event pool by said observer threads, by examining the event pool by a detection service upon the input event being received and by storing said input events to a local or remote database.

2. The method of claim 1 further comprising the step of logging user activity on said input device.

3. The method of claim 1 or 2, further comprising:
storing at least one of the following items: the information about the detected and / or logged user activity, the information about the foreground running application, the hashed user-interface-element management list and the screenshot at a local and / or a remote database.

4. The method of any of claims 1 to 3 further comprising the step of flushing said event pool after the examination of the event pool.

5. The method of any of claims 1 to 4, further comprising:
extracting at least one of the following further items: at least one fully qualified class name and / or at least one ID and / or at least one relation of at least one user-interface-element from the user-interface-element management list and storing the extracted data at a local and / or remote database.

6. The method of any of claims 1 to 5, wherein the screenshot is created by reading data from a buffer and creating a picture from this buffer.

7. The method of any of claims 1 to 6, wherein the remote database is a database of a remote server.

8. The method of claims 2 to 7, wherein at least one of the items stored at a local and / or remote database is labelled with an respective unambiguous tag.

9. A computer program product comprising one or more computer readable media having computer executable instructions for performing the steps of the method of any of claims 1 to 8.

## Patentansprüche

1. Verfahren zum Überwachen einer Benutzeraktivität auf einem Mobilgerät, auf dem ein mobiles Android-Betriebssystem läuft und das eine Eingabeeinheit und eine Ausgabeeinheit aufweist, wobei das Verfahren die in der folgenden Folge ausgeführten Schritte aufweist:
(a) Erfassen einer Benutzeraktivität auf der Eingabeeinheit;
(b) Identifizieren einer im Vordergrund laufenden Anwendung;
(c) Hashen einer Benutzeroberflächenelementmanagementliste der im Vordergrund laufenden Anwendung;
(d) Erzeugen eines Screenshot, der auf der Ausgabeeinheit dargestellte Elemente enthält,
wobei die im Vordergrund laufende Anwendung durch Abfragen des "topActivity"-Feldes des ActivityManager.RunningTasklnfo-Objekts eines Managers für laufende Anwendungen identifiziert wird, immer wenn eine Benutzeraktivität auf der Eingabeeinheit erfasst wird, und
wobei die Benutzeraktivität auf der Eingabeeinheit durch einen Observer Thread erfasst wird, der für jede Eingabeeinheit erzeugt wird, wobei die Eingabeereignisse durch die Observer Threads erhalten werden und die Eingabeereignisse durch die Observer Threads an einen Ereignispool übermittelt werden, wobei der Ereignispool durch einen Erfasssungsdienst untersucht wird, nachdem das Eingabeereignis empfangen wurde, und wobei die Eingabeereignisse in einer lokalen oder in einer abgesetzten Datenbank gespeichert werden.

2. Verfahren nach Anspruch 1, ferner mit dem Schritt zum Aufzeichnen der Benutzeraktivität auf der Eingabeeinheit.

3. Verfahren nach Anspruch 1 oder 2, ferner mit dem Schritt zum Speichern mindestens eines der folgenden Elemente: Information über die erfasste und/oder aufgezeichnete Benutzeraktivität, Information über die im Vordergrund laufende Anwendung, die gehashte Benutzeroberflächenelementmanagementliste und den Screenshot in einer lokalen und/oder in einer abgesetzten Datenbank.

4. Verfahren nach einem der Ansprüche 1 bis 3, ferner mit dem Schritt zum Leeren des Ereignispools nach der Untersuchung des Ereignispools.

5. Verfahren nach einem der Ansprüche 1 bis 4, ferner mit dem Schritt zum Extrahieren mindestens eines der folgenden weiteren Elemente: mindestens einen voll qualifizierten Klassennamen und/oder mindestens eine ID und/oder mindestens eine Beziehung mindestens eines Benutzeroberflächenelements von der Benutzeroberflächenelementmanagementliste und Speichern der extrahierten Daten in einer lokalen und/oder in einer abgesetzten Datenbank.

6. Verfahren nach einem der Ansprüche 1 bis 5, wobei der Screenshot durch Lesen von Daten von einem Pufferspeicher und Erzeugen eines Bildes von den vom Pufferspeicher gelesenen Daten erzeugt wird.

7. Verfahren nach einem der Ansprüche 1 bis 6, wobei die abgesetzte Datenbank eine Datenbank eines abgesetzten Servers ist.

8. Verfahren nach einem der Ansprüche 2 bis 7, wobei die in der lokalen und/oder in der abgesetzten Datenbank gespeicherten Elemente durch ein entsprechendes eindeutiges Kennzeichen gekennzeichnet sind.

9. Computerprogrammprodukt mit einem oder mehreren computerlesbaren Medien, die durch einen Computer ausführbare Anweisungen zum Ausführen der Schritte des Verfahrens nach einem der Ansprüche 1 bis 8 speichern.

## Revendications

1. Procédé de suivi de l'activité d'un utilisateur sur un appareil mobile doté du système d'exploitation Android mobile et comportant une unité d'entrée et une unité de sortie, ledit procédé comprenant les étapes suivantes dans l'ordre suivant :
(a) détection de l'activité de l'utilisateur sur l'unité d'entrée ;
(b) identification d'une application exécutée en avant-plan ;
(c) hachage d'une liste de gestion d'éléments d'interface d'utilisateur de l'application exécutée en avant-plan ;
(d) génération d'une capture d'écran comprenant les éléments affichés sur l'unité de sortie ;
l'application exécutée en avant-plan étant identifiée par demande d'activité principale de champ de l'objet ActivityManager.RunningTaskInfo d'un gestionnaire d'application en cours chaque fois qu'une activité d'utilisateur est détectée sur le dispositif d'entrée, et
l'activité de l'utilisateur sur le dispositif d'entrée étant détectée par un thread observateur généré pour chaque dispositif d'entrée, les événements d'entrée étant obtenus par les threads observateurs et les événements d'entrée étant affectés à un pool d'événements par les threads observateurs, par examen du pool d'événements par un service de détection quant à l'événement d'entrée reçu et par stockage des événements d'entrée dans une base de données locale ou distante.

2. Procédé selon la revendication 1, comprenant en outre l'étape d'enregistrement de l'activité d'utilisateur sur le dispositif d'entrée.

3. Procédé selon la revendication 1 ou la revendication 2, comprenant en outre :
le stockage d'au moins un des éléments suivants : l'information relative à l'activité détectée et / ou enregistrée de l'utilisateur, l'information relative à l'application exécutée en avant-plan, la liste de gestion d'éléments d'interface d'utilisateur hachée et la capture d'écran dans une base de données locale et/ou distante.

4. Procédé selon l'une des revendications 1 à 3, comprenant en outre l'étape de nettoyage du pool d'événements après examen dudit pool d'événements.

5. Procédé selon l'une des revendications 1 à 4, comprenant en outre :
l'extraction d'au moins un des autres éléments suivants : au moins un nom de classe entièrement qualifié et / ou d'au moins un identifiant et / ou d'au moins une relation d'au moins un élément d'interface d'utilisateur de la liste de gestion d'éléments d'interface d'utilisateur et le stockage des données extraites dans une base de données locale et/ou distante.

6. Procédé selon l'une des revendications 1 à 5, où la capture d'écran est générée par lecture de données d'une mémoire tampon et la génération d'une image à partir de ladite mémoire-tampon.

7. Procédé selon l'une des revendications 1 à 6, où la base de données distante est une base de données d'un serveur distant.

8. Procédé selon les revendications 2 à 7, où au moins un des éléments stockés dans une base de données locale et/ou distante est étiqueté avec une étiquette non équivoque respective.

9. Produit de programme informatique comprenant un ou plusieurs supports lisibles par un ordinateur avec des instructions exécutables par un ordinateur pour la mise en oeuvre des étapes du procédé selon l'une des revendications 1 à 8.
